# EUROPÄISCHE PATENTANMELDUNG

(11) **EP 1 459 633 A2**
(43) Veröffentlichungstag der Anmeldung: **22.09.2004**
(21) Anmeldenummer: 04006404.0
(22) Anmeldetag: 17.03.2004
(51) Int. Cl.: A21C 9/06, A21C 3/06

(54) **Vorrichtung zum Herstellen von zusammengerollten Teigerzeugnissen, insbesondere von Strudeln mit Füllungen**

(30) Priorität: 18.03.2003 DE 10311944
(71) Anmelder: Back-Frisch GmbH, 81549 München (DE)
(72) Erfinder: Nowack, Michael, 81549 München (DE)
(74) Vertreter: Nätebusch, Roderich

(57) **Zusammenfassung**

Bei einer Vorrichtung zum Herstellen von zusammengerollten Teigerzeugnissen, insbesondere von Strudeln mit Füllungen aus einer in einer Längsförderrichtung bewegten Teigbahn (Tb), auf die gegebenenfalls Füllungen (Fü) aufbringbar sind und die mittels lediglich einer einzigen schräg zu der betreffenden Längsförderrichtung angeordneten Wendewalze (Bw) zu einem kontinuierlichen Teigbahnwickel (Tw) wickelbar ist, der in einem Austrittsbereich in einzelne Wickelteile aufteilbar ist, ist in dem genannten Austrittsbereich ein drehbar angeordnetes Formungsrad (Fr)vorgesehen ist, dessen Radumfangsbereich als derart geformte und dimensionierte Ausnehmung ausgebildet ist, dass durch diese Ausnehmung und eine in radialer Richtung von dem betreffenden Formungsrad (Fr) verlaufende Ableitbahn (Ab) für den Teigbahnwickel (Tw) mit der darin gegebenenfalls enthaltenen Füllung (Fü) diesem durch Druckformung eine bestimmte Außenform erteilbar ist

## Beschreibung

Die Erfindung bezieht sich auf eine Vorrichtung zum Herstellen von zusammengerollten Teigerzeugnissen, insbesondere von Strudeln mit Füllungen, aus einer in einer Längsförderrichtung bewegten Teigbahn, auf die gegebenenfalls Füllungen aufbringbar sind und die mittels einer lediglich eine einzige schräg zu der betreffenden Längsförderrichtung angeordnete Wendewalze enthaltenden Wendewalzenanordnung zu einem Teigbahnwickel wickelbar ist, der in einem Austrittsbereich in einzelne Wickelteile aufteilbar ist, wobei in dem genannten Austrittsbereich eine Formungseinrichtung vorgesehen ist, durch die dem Teigbahnwickel eine durch die Form der betreffenden Formungseinrichtung bestimmte Außenform erteilbar ist,

Es sind bereits ein Verfahren und eine Vorrichtung zum Herstellen von gefüllten Kuchen aus einer Teigmasse bekannt (DE 693 02 034 T2 entsprechend EP 93 300 614.0), die aus einem Förderer zugeführt wird. Die betreffende wandernde Teigmasse wird zu einer Teigbahn gleichmäßiger Breite und Dicke gestreckt, und auf der betreffenden Teigbahn erfolgt ein kontinuierliches Ablegen einer Füllung, während die betreffende Teigbahn auf dem Förderer wandert. Die so wandernde Teigbahn mit der Füllung wird in der Breitenrichtung zu einer Teigstange derart aufgewickelt, dass die Füllung von der Teigbahn umgeben ist. Schließlich wird die Teigstange veranlasst, von dem vorderen Ende des Förderers frei herabzufallen, und die betreffende herabfallende Teigstange wird durch ihr Zusammendrücken mit einer Unterteilungseinrichtung unterteilt, welche ebene Drückflächen aufweist, so dass die betreffende Teigstange in getrennte Stücke unterteilt wird. Dabei soll keine Füllung freigelegt werden. Bei dieser bekannten Vorrichtung ist zum Aufwickeln der wandernden Teigbahn mit der Füllung in einer Breitenrichtung zu einer Teigstange eine Wickeleinrichtung mit einer einzigen schräg zu der Teigbahn-Fördereinrichtung angeordneten Wendewalze vorgesehen, die durch eine gezahnte Rolle bzw. Walze gebildet ist. Ein derartiger Vorrichtungsaufbau eignet sich jedoch nicht zur Herstellung von zusammengerollten Teigerzeugnissen, und zwar insbesondere von Strudelfüllungen, an deren äußere Formgebung besondere Anforderungen gestellt werden. Durch das Herabfallen der in der erwähnten Unterteilungseinrichtung unterteilten Teigstangenstücke ist nämlich eine zusätzliche Nachbearbeitung der unterteilten Teigstangenstücke infolge ihrer Verformung in Folge des Herabfallens erforderlich.

Es ist ferner ein Verfahren zum Formen von Kaugummi zu einem ausgerollten Band bekannt (DE 689 19 067 T2 entsprechend EP 89 904 920.9), bei dem eine aus Kaugummi bereitgestellte Masse zu einer dünnen, flachen, im allgemeinen rechteckigen Anordnung mit einer Vorderkante geformt wird, bei dem die flache Lage um die erwähnte Vorderkante herum aufgerollt wird und bei dem schließlich die aufgerollte flache Lage in Ebenen geschnitten wird, die im allgemeinen senkrecht zur Vorderkante liegen. Bei einer zur Durchführung dieses bekannten Verfahrens dienenden Vorrichtung sind zwar verschiedene Wendewalzen und sogar eine Bremsbürste vorgesehen. Mit dieser Konstruktion gelingt es jedoch nicht, kontinuierlich zusammengerollte Teigerzeugnisse und insbesondere Strudel mit Füllungen herzustellen.

Es ist auch schon eine Vorrichtung zur kontinuierlichen Herstellung einer aus vielen Lagen bestehenden Teigschicht bekannt (DE 21 08 720 B2), bestehend aus einer Zufuhreinrichtung zum Zuführen des Ausgangsmaterials, einer sich daran anschließenden Transporteinrichtung, einer Schichtvorrichtung und einer Walzeinrichtung für das geschichtete Ausgangsmaterial. Die betreffende Schichtvorrichtung besteht aus einer oberhalb des Transportbandes angeordneten auf- und abbewegbaren Pressplatte, von der das in Form einzelner Portionen zugeführte Ausgangsmaterial, das aus einem eine Füllung enthaltenden Teigmantel besteht, zusammengedrückt wird. Diese bekannte Vorrichtung eignet sich zur Herstellung von Lebensmitteln, wie Blätterteiggebäck und süßen Rouladen. Für eine kontinuierliche Herstellung von zusammengerollten Teigerzeugnissen, insbesondere von Strudeln mit Füllungen, eignet sich indessen die betreffende bekannte Vorrichtung nicht ohne weiteres.

Zum Zusammenrollen von Teigerzeugnissen ist es bereits bekannt (EP 0 204 490 B1), zwei vertikal gegenüberliegende Endlos-Riemeneinrichtungen vorzusehen, die in entgegengesetzte Richtungen laufen, wobei der Riemen der unteren Einrichtung vorwärts und schneller als der Riemen der oberen Einrichtung angetrieben wird. Da sich der Durchmesser des so zusammengerollten Teigerzeugnisses ständig vergrößert, ist eine Zusatzeinrichtung vorgesehen, die eine Vergrößerung des Spaltes zwischen den beiden Endlos-Riemeneinrichtungen ermöglicht. Abgesehen von dem damit insgesamt verbundenen relativ hohen apparativen Aufwand ist keine einfache Weiterverarbeitung des jeweils zusammengerollten Teigerzeugnisses ermöglicht. Vielmehr ist noch eine manuelle Verarbeitung des jeweils zusammengerollten Teigerzeugnisses erforderlich, um diesem die jeweils gewünschte Außenform und Länge zu geben.

Es ist zwar auch schon eine Vorrichtung zum Aufwickeln eines Teigbandes bekannt (DE 44 02 346 A1), welche mit einer das Teigband transportierenden Fördereinrichtung, insbesondere einem Förderband versehen ist, an deren bzw. dessen Ausgang eine das Teigband erfassende Einrolleinrichtung angeordnet ist. Diese Einrolleinrichtung weist jedoch eine Mehrzahl von um den Ausgangsbereich der Fördereinrichtung umgrenzend gruppierten Einrollwalzen auf, welche in einem der Transport- bzw. Bewegungsrichtung der Fördereinrichtung entsprechenden gemeinsamen Drehsinn angetrieben sind. Damit weist diese bekannte Vorrichtung ebenfalls einen relativ hohen apparativen Aufwand zum Wickeln von Teigerzeugnissen auf. Überdies sind auch bei dieser bekannten Vorrichtung nach dem Zusammenrollen eines Teigerzeugnisses noch manuelle Arbeitsvorgänge erforderlich, um dem Teigbahnwickel eine gewünschte Außenform zu geben.

Der Erfindung liegt daher die Aufgabe zugrunde, einen Weg zu zeigen, wie eine Vorrichtung der eingangs genannten Art weiterzubilden ist, um auf relativ einfache Weise kontinuierlich zusammengerollte Teigerzeugnisse und insbesondere Strudel mit Füllungen herzustellen und diesen zusammengerollten Teigerzeugnissen eine gewünschte Außenform zu geben, ohne dass dazu noch manuelle Betätigungen erforderlich sind.

Gelöst wird die vorstehend aufgezeigte Aufgabe bei einer Vorrichtung der eingangs genannten Art erfindungsgemäß dadurch, dass die Formungseinrichtung durch ein an dem genannten Austrittsbereich drehbar angeordnetes Formungsrad gebildet ist, dessen Radumfangsbereich als derart geformte und dimensionierte Ausnehmung ausgebildet ist, dass durch diese Ausnehmung und eine in radialer Richtung von dem betreffenden Formungsrad verlaufende Ableitbahn für den Teigbahnwickel mit der darin gegebenenfalls enthaltenen Füllung diesem eine Druckformung erteilbar ist.

Die Erfindung zeichnet sich durch den Vorteil aus, dass bei einer kontinuierlichen Herstellung von zusammengerollten Teigerzeugnissen, insbesondere von Strudeln mit Füllungen, mit einer besonders einfach aufbaubaren, aber dennoch sehr wirksamen Formungseinrichtung, die dem jeweiligen Teigbahnwickel durch gleichmäßige Formung die gewünschte Außenform zu erteilen vermag, ausgekommen werden kann. Manuelle Arbeiten zur Formgebung des jeweiligen Teigbahnwickels sind jedenfalls nicht mehr erforderlich.

Zweckmäßigerweise weist das Formungsrad in seinem Radumfangsbereich wenigstens ein den Teigbahnwickel bei laufendem Formungsrad in Wickelteile definierter Länge aufteilendes Trennelement auf. Dadurch lässt sich der Teigbahnwickel auf relativ einfache Weise in Wickelteile definierter Länge aufteilen.

Vorzugsweise ist das Formungsrad dabei in seinem Durchmesser so bemessen, dass der Teigbahnwickel pro Formungsradumlauf in eine festgelegte Mehrzahl von Wickelteilen aufteilbar ist. Hierdurch lässt sich mit nur einem Formungsrad der Teigbahnwickel auf besonders einfache Weise in Wickelteile gleicher oder unterschiedlicher Längen aufteilen.

Das zuvor erwähnte jeweilige Trennelement des Formungsrades ist vorzugsweise ein Messerelement. Dadurch lässt sich der Teigbahnwickel auf besonders einfache Weise in einzelne Wickelteile aufteilen.

Zur Gewährleistung eines störungsfreien Betriebs ist die Formungseinrichtung vorzugsweise mit einer antihaftenden Oberfläche für den Teigbahnwickel versehen. Die antihaftende Oberfläche ist dabei zweckmäßigerweise durch eine PTFE-Schicht (Polytetrafluorethylen) oder durch eine Mehlschicht gebildet.

Vorzugsweise ist die Wendewalze durch eine auf ihrem Walzenumfang Borsten tragende Borstenwalze gebildet. Alternativ dazu kann die Wendewalze durch eine auf ihrem Walzenumfang Noppen tragende Noppenwalze gebildet sein. In beiden Fällen ergibt sich der Vorteil eines besonders geringen Aufwands hinsichtlich der Realisierung der einzigen vorgesehenen Wendewalze , die hinsichtlich ihrer Wickelfunktion besonders wirksam und zuverlässig ist; ein Anhaften oder Hängenbleiben von Teig an der betreffenden Wendewalze ist jedenfalls auf diese Weise unterbunden.

Vorzugsweise bestehen die Borsten bzw. die Noppen aus Kunststoff und sind elastisch. Auf diese Weise ist eine die Außenseite des jeweils zusammengerollten Teigerzeugnisses praktisch nicht beeinträchtigende Wickelung ermöglicht.

Anhand von Zeichnungen wird die Erfindung nachstehend an Ausführungsbeispielen näher erläutert.
- Fig. 1: zeigt in einer schematischen Draufsicht eine Vorrichtung gemäß einer ersten Ausführungsform der vorliegenden Erfindung.
- Fig. 2: zeigt eine Schnittansicht längs des in Fig. 1 eingetragenen Schnitts II-II.
- Fig. 3: zeigt eine Schnittansicht längs des in Fig. 1 eingetragenen Schnitts III-III.
- Fig. 4: zeigt eine Schnittansicht längs des in Fig. 1 eingetragenen Schnitts IV-IV.
- Fig. 5: zeigt in einer schematischen Draufsicht eine Vorrichtung gemäß einer zweiten Ausführungsform der vorliegenden Erfindung.

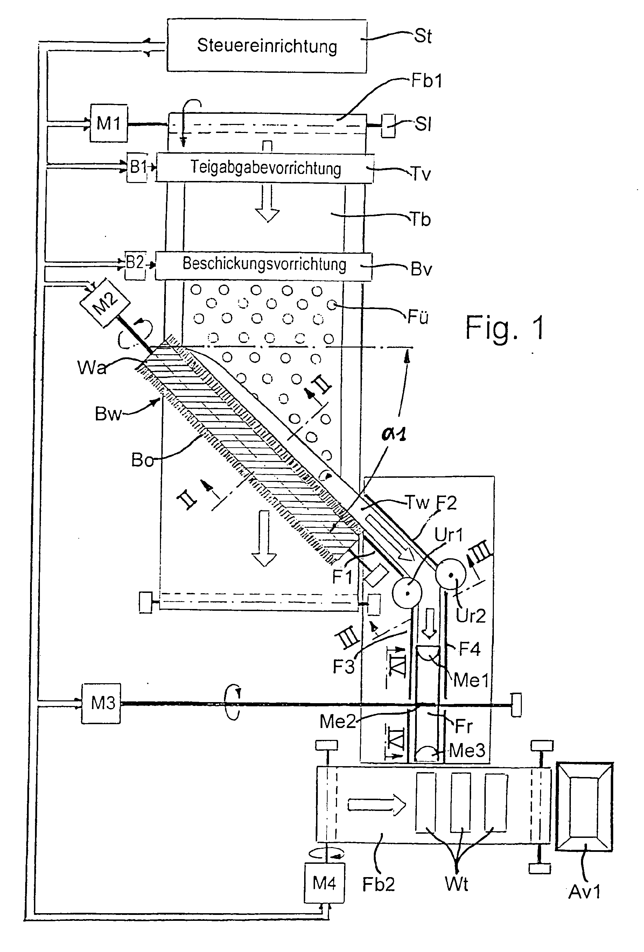

Die in Fig. 1 dargestellte erste Ausführungsform der Vorrichtung gemäß der Erfindung enthält ein erstes endloses Förderband Fb1, welches um in Fig. 1 nicht näher bezeichnete Tragwalzen herumläuft. Im oberen Teil der Fig. 1 ist in diesem Zusammenhang angedeutet, dass die dort vorgesehene Tragwalze an ihrem einen Ende von einem Elektromotor M1 antreibbar ist und an ihrem anderen Ende von einem Stützlager Sl aufgenommen ist. Entsprechende Stützlager nehmen die andere Tragwalze auf, um die das erste endlose Förderband Fb1 herumläuft, ohne dass diese in Fig. 1 näher bezeichnet sind. Der erwähnte Elektromotor M1 ist von einer zentralen Steuereinrichtung St her ansteuerbar.

An dem in Fig. 1 im oberen Bereich dargestellten Eintrittsbereich des endlosen Förderbandes Fb1 befindet sich eine Teigabgabevorrichtung Tv, die von einer ebenfalls von der zentralen Steuereinrichtung St her ansteuerbaren Betätigungseinrichtung B1 zur Abgabe bzw. Stillsetzung einer Teigabgabe ansteuerbar ist. Durch eine Teigabgabe von der Teigabgabevorrichtung Tv wird eine Teigbahn Tb auf die Oberseite des endlosen Förderbandes Fb1 abgegeben. Diese Teigbahn Tb bewegt sich dann zusammen mit der Oberseite des endlosen Förderbandes Fb1 in der in Fig. 1 angegebenen Pfeilrichtung, das ist die Längsförderrichtung.

In der erwähnten Längsförderrichtung folgt der Teigabgabevorrichtung Tv gemäß Fig. 1 eine Beschickungsvorrichtung Bv, die von einer ebenfalls von der zentralen Steuereinrichtung St her ansteuerbaren Betätigungseinrichtung B2 ansteuerbar ist. Von dieser Beschickungsvorrichtung Bv kann Füllmaterial, wie z.B. Obst bzw. Gemüse auf die Teigbahn Tb abgegeben werden. Die mit derartigen Füllungen Fü versehenen Teigbahn Tb wird dann anschließend, wie noch erläutert wird, zu einem sogenannten Strudelwickel zusammengerollt.

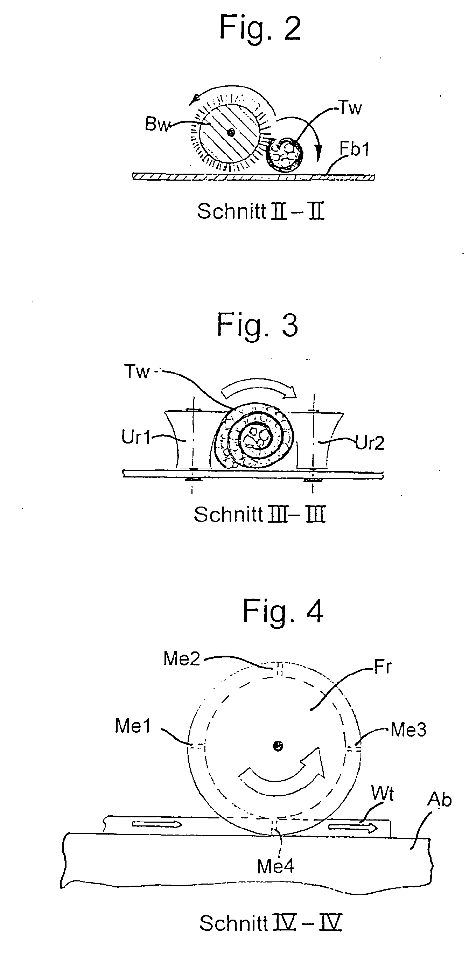

Für diesen Wickelvorgang ist bei der in Fig. 1 gezeigten Ausführungsform der vorliegenden Erfindung eine Wendewalzenanordnung vorgesehen, die durch eine einzige schräg zu der genannten Längsförderrichtung angeordnete Wendewalze Bw gebildet ist. Diese Wendewalze, die im vorliegenden Fall eine Borstenwalze ist, welche auf dem Umfang einer Walze Wa elastische Borsten Bo trägt, ist unter einem Neigungswinkel α1 von einer rechtwinklig zu der genannten Längsförderrichtung verlaufenden Ebene aus in diese Längsförderrichtung geneigt. Der Neigungswinkel α1 beträgt hier beispielsweise 45°; er kann aber auch größer oder kleiner sein als dieser Wert. Die Borstenwalze Bw wird von einem ebenfalls von der zentralen Steuereinrichtung St her ansteuerbaren Elektromotor M2 praktisch gegenläufig zur Längsförderrichtung der Teigbahn Tb gedreht, wie dies die Schnittansicht gemäß Fig. 2 deutlich erkennen lässt, die den Schnitt gemäß der Schnittlinie II-II in Fig. 1 verdeutlicht.

Der so mittels der Borstenwalze Bw aus der Teigbahn Tb gewickelte kontinuierliche Teigbahnwickel Tw gelangt dann bei der in Fig. 1 dargestellten Ausführungsform der vorliegenden Erfindung zwischen Führungsschienen F1 und F2 zu Umlenkrollen Ur1, Ur2 sowie zwischen daran sich anschließenden Führungsschienen F3 und F4 zum Austrittsbereich der betrachteten Vorrichtung hin. Die erwähnten Umlenkrollen Ur1, Ur2 nehmen dabei lediglich eine Umlenkung des Teigbahnwickels Tw vor, wie dies die in Fig. 3 dargestellte Schnittansicht gemäß der in Fig. 1 eingetragenen Schnittebene III-III veranschaulicht. Die in Fig. 3 näher dargestellten Umlenkrollen Ur1, Ur2 können übrigens in Abweichung von den in Fig. 3 dargestellten Verhältnissen tatsächlich jeweils auch anders geformt sein. So können sie beispielsweise jeweils mit einer mittensymmetrischen Ausnehmung versehen sein, welche als Teil einer Zylinderform an der Außenseite des Teigbahnwickels Tw anliegt.

In dem zuvor erwähnten Austrittsbereich ist nun bei der in Fig. 1 dargestellten Ausführungsform der vorliegenden Erfindung eine Formungseinrichtung in Form eines Formungsrades Fr vorgesehen, durch die bzw. das dem kontinuierlichen Teigbahnwickel Tw eine durch die Durchtrittsform der betreffenden Formungseinrichtung bestimmte Außenform erteilbar ist. Das die Formungseinrichtung bildende erwähnte Formungsrad Fr, das von einem an der oben erwähnten zentralen Steuereinrichtung St angeschlossenen und von dieser ansteuerbaren Elektromotor M3 antreibbar ist, kann beispielsweise eine halbkreisförmige Ausnehmung im Radumfangsbereich aufweisen, die zusammen mit einer in radialer Richtung von dem betreffenden Formungsrad Fr verlaufenden Ableitbahn für den Teigbahnwickel Tw mit der darin gegebenenfalls enthaltenen Füllung Fü diesem eine Druckformung zu erteilen vermag. Diese Verhältnisse sind in Fig. 4 näher veranschaulicht, die eine Schnittansicht längs der in Fig. 1 eingetragenen Schnittebene IV-IV veranschaulicht.

An dieser Stelle sei angemerkt, dass die Ausnehmung im Radumfangsbereich des Formungsrades Fr auch anders als zuvor erwähnt geformt sein kann. So kann die betreffende Ausnehmung beispielsweise oval oder spitz zulaufend geformt sein.

Das zuvor betrachtete Formungsrad Fr weist in seinem Radumfangsbereich wenigstens ein den kontinuierlichen Teigbahnwickel Tw bei laufendem Formungsrad Fr in Wickelteile Wt definierter Länge aufteilendes Trennelement auf, welches im vorliegenden Fall durch Messerelemente bzw. Trennmesser Me1, Me2, Me3, Me4 gebildet ist, wie dies aus Fig. 1 und 4 ersichtlich ist. Der Durchmesser des Formungsrades Fr ist dabei im vorliegenden Fall so bemessen, dass der Teigbahnwickel Tw pro Formungsradumlauf in eine festgelegte Mehrzahl, nämlich in vier Wickelteile Wt aufteilbar ist.

Die vorstehend erwähnten Wickelteile Wt, in die der Teigbahnwickel Tw aufgeteilt ist, werden bei der in Fig. 1 dargestellten Ausführungsform der vorliegenden Erfindung von einem zweiten endlosen Förderband Fb2 aufgenommen, das von einem ebenfalls an der zentralen Steuereinrichtung St angeschlossenen und von dieser ansteuerbaren Elektromotor M4 antreibbar ist. Mit Hilfe dieses endlosen Förderbandes Fb2 können die Wickelteile Wt zu einer Wickelteilaufnahmevorrichtung Av1 hingeleitet und von dieser für eine Lagerung und/oder weitere Verarbeitung aufgenommen werden.

Um den Teigbahnwickel Tw mittels der Formungseinrichtung bzw. mit dem diese bildenden Formungsrad Fr problemlos verarbeiten zu können, ist die betreffende Formungseinrichtung bzw. das genannte Formungsrad Fr vorzugsweise mit einer antihaftenden Oberfläche für den Teigbahnwickel Tw versehen. Zweckmäßigerweise ist die betreffende antihaftende Oberfläche dabei durch eine PTFE-Schicht (Polytetrafluorethylen) gebildet, oder sie kann einfach durch eine Mehrschicht gebildet sein.

Im Hinblick auf die problemlose Verarbeitung des Teigbahnwickels Tw sei noch folgendes angemerkt: Selbstverständlich muss die zu dem betreffenden Teigbahnwickel Tw führende Teigbahn Tb von dem endlosen Förderband Fb1 leicht abgelöst werden können. Aus diesem Grunde wird das endlose Förderband Fb1 auf seiner die Teigbahn Tb tragenden Oberfläche ebenfalls vorzugsweise antihaftend sein.

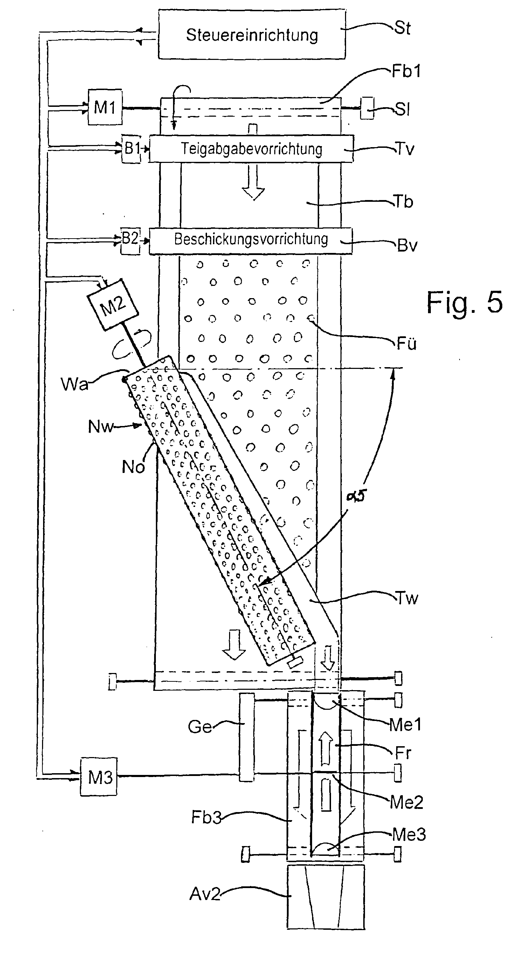

In Fig. 5 ist eine zweite Ausführungsform der Vorrichtung gemäß der vorliegenden Erfindung veranschaulicht, die einige Modifikationen gegenüber der in Fig. 1 dargestellten ersten Ausführungsform der Erfindung zeigt. Für gleiche oder entsprechende Elemente bzw. Vorrichtungen sind in Fig. 5 übrigens dieselben Bezugszeichen verwendet wie in Fig. 1. Im folgenden wird lediglich auf diejenigen in Fig. 5 dargestellten Merkmale eingegangen, in denen sich die betreffende zweite Ausführungsform von der in Fig. 1 gezeigten Ausführungsform unterscheidet.

Im Unterschied zu den in Fig. 1 dargestellten Verhältnissen ist bei der in Fig. 5 gezeigten zweiten Ausführungsform der Vorrichtung gemäß der vorliegenden Erfindung die einzige vorgesehene Wendewalze durch eine Noppenwalze Nw gebildet, die auf dem Umfang einer Walze Wa elastische Kunststoffnoppen No trägt. Die betreffende Noppenwalze Nw ist unter einem Neigungswinkel α5 bezogen auf eine rechtwinklig zur Längsförderrichtung verlaufende Ebene schräg zu der betreffenden Längsförderrichtung angeordnet. Der Neigungswinkel α5 beträgt hier vorzugsweise etwa 60° bis 70°. Es sei an dieser Stelle noch angemerkt, dass die Noppenwalze Nw selbstverständlich auch durch eine Borstenwalze Bw ersetzt sein kann, wie sie bei der Ausführungsform gemäß Fig. 1 verwendet ist.

Abweichend von den in Fig. 1 gezeigten Verhältnissen wird der kontinuierliche Teigbahnwickel Tw bei der in Fig. 5 dargestellten zweiten Ausführungsform der Erfindung nach Verlassen seines Anlagebereiches an der die Wendewalze bildenden Noppenwalze Nw noch ein Stück auf dem ersten endlosen Förderband Fb1 zum Austrittsbereich der Vorrichtung hingeleitet, wie dies durch einen Pfeil an dem betreffenden Teigbahnwickel Tw angedeutet ist. Damit wird das betreffende endlose Förderband Fb1 in vorteilhafter Weise für den Weitertransport des Teigbahnwickels Tw zum Austrittsbereich der Vorrichtung mitausgenutzt.

In dem genannten Austrittsbereich befindet sich hier wie bei der in Fig. 1 dargestellten ersten Ausführungsform der vorliegenden Erfindung eine Formungseinrichtung in Form des Formungsrades Fr, welches ebenfalls von einem Elektromotor M3 ansteuerbar ist, der wiederum von der zentralen Steuereinrichtung St steuerbar ist. Im vorliegenden Fall ist mit der Abtriebsseite des Elektromotors M3 noch ein Getriebe Ge verbunden, welches ein unterhalb des Formungsrades Fr laufendes endloses Förderband Fb3 so antreibt, dass sich dieses endlose Förderband Fb3 und das Formungsrad Fr mit ihren einander zugewandten Bereichen in gleicher Richtung und vorzugsweise synchron bewegen.

In Fig. 5 ist unterhalb des endlosen Förderbandes Fb3 noch eine Wickelteilaufnahmevorrichtung Av2 angedeutet, die die gleiche Funktion besitzt wie die in Fig. 1 dargestellte Wickelteilaufnahmevorrichtung Av1.

## Patentansprüche

1. Vorrichtung zum Herstellen von zusammengerollten Teigerzeugnissen, insbesondere von Strudeln mit Füllungen, aus einer in einer Längsförderrichtung bewegten Teigbahn, auf die gegebenenfalls Füllungen aufbringbar sind und die mittels einer lediglich eine einzige schräg zu der betreffenden Längsförderrichtung angeordnete Wendewalze enthaltenden Wendewalzenanordnung zu einem Teigbahnwickel wickelbar ist, der in einem Austrittsbereich in einzelne Wickelteile aufteilbar ist,
wobei in dem genannten Austrittsbereich eine Formungseinrichtung vorgesehen ist, durch die dem Teigbahnwickel eine durch die Form der betreffenden Formungseinrichtung bestimmte Außenform erteilbar ist,
**dadurch gekennzeichnet, dass** die Formungseinrichtung (Fr) durch ein an dem genannten Austrittsbereich drehbar angeordnetes Formungsrad (Fr) gebildet ist, dessen Radumfangsbereich als derart geformte und dimensionierte Ausnehmung ausgebildet ist, dass durch diese Ausnehmung und eine in radialer Richtung von dem betreffenden Formungsrad (Fr) verlaufende Ableitbahn (Ab) für den Teigbahnwickel (Tw) mit der darin gegebenenfalls enthaltenen Füllung (Fü) diesem eine Druckformung erteilbar ist.

2. Vorrichtung nach Anspruch 1, **dadurch gekennzeichnet, dass** das Formungsrad (Fr) in seinem Radumfangsbereich wenigstens ein den Teigbahnwickel (Tw) bei laufendem Formungsrad (Fr) in Wickelteile (Wt) definierter Länge aufteilendes Trennelement (Me1, Me2, Me3, Me4) aufweist.

3. Vorrichtung nach Anspruch 2, **dadurch gekennzeichnet, dass** das Formungsrad (Fr) in seinem Durchmesser so bemessen ist, dass der Teigbahnwickel (Tw) pro Formungsradumlauf in eine festgelegte Mehrzahl von Wickelteilen (Wt) aufteilbar ist.

4. Vorrichtung nach Anspruch 2 oder 3, **dadurch gekennzeichnet, dass** das jeweilige Trennelement (Me1, Me2, Me3, Me4) ein Messerelement (Me1, Me2, Me3, Me4) ist.

5. Vorrichtung nach einem der Ansprüche 1 bis 4, **dadurch gekennzeichnet, dass** die Formungseinrichtung (Fr) mit einer antihaftenden Oberfläche für den Teigbahnwickel (Tw) versehen ist.

6. Vorrichtung nach Anspruch 5, **dadurch gekennzeichnet, dass** die antihaftende Oberfläche durch eine PTFE-Schicht (Polytetrafluorethylen) gebildet ist.

7. Vorrichtung nach Anspruch 5, **dadurch gekennzeichnet, dass** die antihaftende Oberfläche durch eine Mehlschicht gebildet ist.

8. Vorrichtung nach einem der Ansprüche 1 bis 7, **dadurch gekennzeichnet, dass** die Wendewalze (Bw) durch eine auf ihrem Walzenumfang Borsten (Bo) tragende Borstenwalze (Bw) gebildet ist.

9. Vorrichtung nach einem der Ansprüche 1 bis 7, **dadurch gekennzeichnet, dass** die Wendewalze (Nw) durch eine auf ihrem Walzenumfang Noppen (No) tragende Noppenwalze (Nw) gebildet ist.

10. Vorrichtung nach Anspruch 8 oder 9, **dadurch gekennzeichnet, dass** die Borsten (Bo) bzw. Noppen (No) aus Kunststoff bestehen und elastisch sind.
